# EUROPEAN PATENT APPLICATION

(11) **EP 2 108 801 A1**
(43) Date of publication of application: **14.10.2009**
(21) Application number: 08103491.0
(22) Date of filing: 10.04.2008
(51) Int. Cl.: F02D 41/00, F02D 19/06, F02D 41/14, F02M 37/00, F02D 41/06, F02D 41/22

(54) **An electronic control unit capable of automatically switching between two fuel systems based on engine conditions**

(71) Applicant: Robert Bosch GmbH, 70442 Stuttgart (DE)
(72) Inventor: Dornhausen, Michael, 71706, Markgroeningen (DE)

(57) **Abstract**

The invention relates to the field of electronic control units (ECU) used to control the combustion engines, especially the electronic control units used to control combustion engines capable of operating with more than one fuel. The electronic control unit controls two fuel systems - one for liquid fuel and other for gaseous fuel. The ECU continuously monitors the performance of the combustion engine and automatically switch from one fuel system to other fuel system when the combustion engine does not perform as expected with the first fuel system.

## Description

### State of the Art

The invention relates to the field of electronic control units ( ECU ) used to control the combustion engines, especially the electronic control units used to control combustion engines capable of operating with more than one fuel.

ECUs controlling combustion engines capable of operating with more than one fuel are known in the state of the art. Also vehicles operating with more than one fuel are already known. The ECUs automatically switch the combustion engine from present fuel system to other fuel system whenever the fuel storage level of the present fuel goes below a threshold.

The disadvantage in the state of the art devices is that the ECUs do not switch automatically from one fuel system to other fuel system based on the engine performance.

### Advantages of the invention

The device and method according to the independent patent claims have the below mentioned advantages:

The automatic switching of the fuel system from one to other has the advantage that the performance of the engine always remains at expected levels. If there is any deterioration in the performance of the engine with the current fuel system, then the ECU switches to other fuel system automatically.

Further improvements and/or advantages are realised by the features of the dependent patent claims.

The ECU provides an indication to the user that one of the fuel systems is not delivering the expected output and the engine needs to be checked.

Also when both the fuel systems are not operating as expected, the ECU will activate the safety measures and either brings the vehicle safely to a halt so that the vehicle can be serviced or if the vehicle has a limp home mode, then the limp home mode is activated to run the engine as long as possible with less engine performance.

### Brief descriptions of the drawings

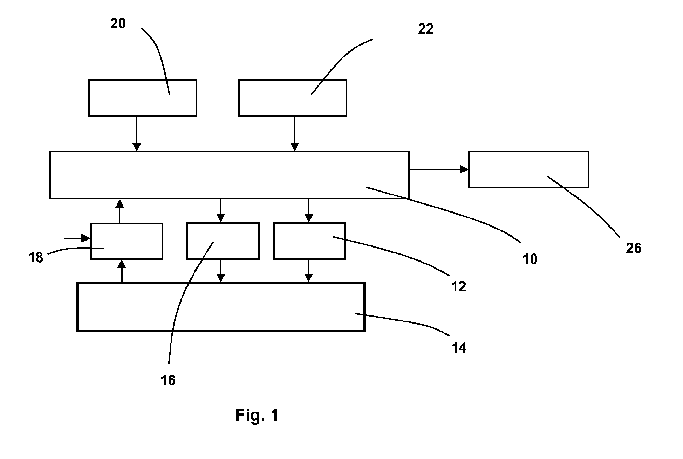

- Figure 1: shows the schematic of connectivity of an ECU with other components

### Description of the embodiments

Shown in Fig. 1 is an ECU 10 controlling a first fuel system 16 (for example gasoline ) and a second fuel system 12 (for example compressed natural gas - CNG ). The ECU 10 receives the inputs form the sensors 18 and user inputs 20, fuel tank status 22. The ECU is connected to a driver information device 26 to inform any error condition in any of the fuel systems 16 and 12. The fuel systems 12 and 16 supply fuel to the combustion engine 14.

In recent times using compressed natural gas ( CNG ) for combustion engines is gaining popularity because of emission requirements. However, CNG is not readily available because the number of CNG gas stations is limited. Therefore some vehicles have a dual-fuel internal combustion engine which can selectively use either gasoline fuel or CNG fuel.

A typical fuel system consists of a fuel tank supplying fuel, a pump to supply the fuel from the fuel tank to a fuel supply pipe at a required pressure, a plurality of injectors injecting fuel into combustion cylinders, spark plug to generate a spark for ignition.

For a dual fuel combustion engine, each fuel system will have the above components, which are not shown in the figure. The electronic control unit 10 controls the fuel systems 16 and 12 based on a combination of parameters like inputs from sensors 18, user input 20, the fuel tank status 22 etc.

The ECU 10 continuously monitors the performance of the combustion engine 14 through a plurality of sensors 18. Typical information received through the sensors 18 include: Ambient Air Temperature, Barometric Pressure, Coolant Temperature, Camshaft position, Crankshaft Position, Knock, Distributor Crank Angle, EGR Valve Position, Manifold Absolute Pressure, Mass Air Flow, Oil Level, Oxygen, Throttle Position, Transmission Speed, and Vehicle Speed.

Based on the inputs from the sensors 18 and the operating conditions of the combustion engine 14, the ECU 10 will control the fuel systems 12 or 16, whichever is presently active, with regard to air to fuel ratio, injection timing, injection fuel quantity, emission control etc.

Based on the inputs from the sensors 18 the ECU 10 continuously evaluates whether the performance of the combustion engine 14 is as expected. If the performance of the combustion engine 14 is not as expected, there may be a fault occurring, for example, misfiring occurring in the combustion engine. Under such condition, the ECU 10 will switch from the current fuel system to the other fuel system.

With the switching of the fuel system, a message is displayed on the driver information device 26. This message will help the user to know that there is a problem with one of the fuel systems and it needs to be checked in the service station.

After the switching to the other fuel system, the ECU 10 will again start monitoring the performance of the combustion engine 14. If the problem was a local one to the previous fuel supply, the performance of the combustion engine 14 will be as expected. But if the same problem persists, the problem is common to both the fuel systems. The ECU 10 will activate the safety measures and either brings the vehicle safely to a halt so that the vehicle can be serviced or if the vehicle has a limp home mode, then the limp home mode is activated to run the engine as long as possible with less engine performance.

This automatic switching from one fuel system to other fuel system is especially advantageous when the engine starts with a gaseous fuel system when the combustion engine is in a vehicle and the ambient temperature is very low. When the gaseous fuel expands in the fuel supply path, the temperature of the expanded gas becomes very low. The residual water in the fuel supply path or the gas itself might freeze and block or obstruct the supply of gaseous fuel. The amount of fuel supplied to the combustion engine becomes unstable and the engine will not run smoothly. Detection of low ambient temperature and a rough or unstable operating condition of the combustion engine is a reason to switch from gaseous fuel system to liquid fuel system. After a while when the temperature of the engine becomes higher, it can be assumed that the gaseous fuel path is heated by the heat of the engine and it can be tried to operate the engine again with gaseous fuel system. On the other side if the liquid fuel system is not operating smooth, the reason might be some blocking of liquid fuel supply and under this condition, the gaseous fuel system can be tried.

## Claims

1. An electronic control unit used to control a combustion engine capable of being operated with a first fuel or a second fuel, **characterised by**
- controlling both fuel systems, i.e. a first fuel system and a second fuel system
- monitoring the performance of the combustion engine through a plurality of sensors
- automatically switching from the first fuel system to the second fuel system when the performance of the combustion engine is not as expected when operated with the first fuel system.

2. An electronic control unit according to claim 1 wherein a message is displayed in a driver information system, if the automatic switching happens from the first fuel system to the second fuel system because of the performance of the combustion engine being not as expected.

3. An electronic control unit according to claim 1 wherein, when the performance of the combustion engine is not as expected with either of the fuel systems, the safety measures will be activated and vehicle will be either safely halted or if the vehicle has a limp home mode, then the limp home mode is activated to run the engine as long as possible with less engine performance.

## Amended claims

### Amended claims in accordance with Rule 137(2) EPC.

**1.** An electronic control unit (10) used to control a combustion engine (14) capable of being operated with a first fuel or a second fuel, **characterised by**
- controlling both fuel systems, i.e. a first fuel system (16) and a second fuel system (12)
- evaluating the occurrence of a fault by monitoring the performance of the combustion engine (14) through a plurality of sensors (18)
- automatically switching from the first fuel system (16) to the second fuel system (12) when a fault occurs in the first fuel system (16)
- automatically switching from the second fuel system (12) to the first fuel system (16) when a fault occurs in the second fuel system (12).

**2.** An electronic control unit (10) according to claim 1 wherein a message is displayed in a driver information system (26), if the automatic switching happens from the current fuel system to the other fuel system because of a fault occurring in the current fuel system.

**3.** An electronic control unit (10) according to claim 1 wherein, when a fault occurs with both the fuel systems (16,12), the safety measures will be activated and vehicle will be either safely halted or if the vehicle has a limp home mode, then the limp home mode is activated to run the engine as long as possible with less engine performance.
